(19) Europäisches Patentamt
European Patent Office
Office européen des brevets

(11) EP 4 752 760 A1

## (12) EUROPEAN PATENT APPLICATION
published in accordance with Art. 153(4) EPC

(43) Date of publication:
03.06.2026 Bulletin 2026/23

(21) Application number: 23949380.2

(22) Date of filing: 22.08.2023

(51) International Patent Classification (IPC):
*G06F 18/2433* (2023.01)

(52) Cooperative Patent Classification (CPC):
G06F 18/2433

(86) International application number:
PCT/CN2023/114252

(87) International publication number:
WO 2025/039187 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Siemens Aktiengesellschaft
80333 München (DE)

(72) Inventor: FENG, Cheng
Beijing 100102 (CN)

(74) Representative: Isarpatent
Patent- und Rechtsanwälte Part G mbB
Friedrichstrasse 31
80801 München (DE)

## (54) ANOMALY EXPLANATION METHOD AND APPARATUS, AND DEVICE AND STORAGE MEDIUM

(57) Embodiments of the present application provide an anomaly interpretation method and apparatus, an electronic device, and a computer storage medium. The anomaly interpretation method includes: obtaining an anomaly detection result including a plurality of detection features; obtaining a target association rule corresponding to the anomaly detection result, where the target association rule includes an antecedent feature value rule and a consequent feature value rule, an antecedent feature in the anomaly detection result meets the antecedent feature value rule, and a consequent feature in the anomaly detection result does not meet the consequent feature value rule; and determining the consequent feature in the anomaly detection result as an anomaly feature, and determining that an anomaly cause is a value of the anomaly feature violating the consequent feature value rule. In an anomaly interpretation solution provided in the embodiments of the present application, by means of a pre-established association rule, an anomaly feature is determined, and an anomaly cause is further determined, so that interpretation content included in anomaly interpretation is enriched, and the interpretation content is more comprehensive, thereby facilitating quick anomaly processing based on the interpretation content.

FIG. 1

## Description

### TECHNICAL FIELD

Embodiments of the present application relate to the field of language processing technologies, and in particular, to an anomaly interpretation method and apparatus, an electronic device, and a computer storage medium.

### BACKGROUND

Anomaly detection aims to identify data instances that do not conform to expected behaviors, which is a classic machine learning task and has many applications in different fields, such as fraud detection and intrusion detection. However, after detecting anomaly data instances, how to perform anomaly interpretation on the anomaly data instances is also of great significance. For example, when a fault detection program of key factory equipment reports an anomaly, operators need to obtain an anomaly interpretation based on anomaly data to perform subsequent operations, such as fault diagnosis and system maintenance.

Existing anomaly interpretation methods usually only determine anomaly features from a plurality of features contained in anomaly data instances, and the interpretation process is regarded as completed. With the foregoing method, the content of anomaly interpretation is relatively single and not comprehensive enough.

### SUMMARY

In view of this, one of the technical problems solved by embodiments of the present application is to provide an anomaly interpretation method and apparatus, an electronic device, and a computer storage medium, so as to obtain richer and more comprehensive interpretation content when interpreting anomaly data.

According to a first aspect, an embodiment of the present application provides an anomaly interpretation method. The method includes:

obtaining an anomaly detection result including a plurality of detection features;
obtaining a target association rule corresponding to the anomaly detection result, where the target association rule is an association relationship among values of the detection features obtained in advance based on a detection result set, the target association rule includes an antecedent feature value rule and a consequent feature value rule, both an antecedent feature and a consequent feature are detection features included in the anomaly detection result, the antecedent feature in the anomaly detection result meets the antecedent feature value rule, and the consequent feature in the anomaly detection result does not meet the consequent feature value rule; and
determining the consequent feature in the anomaly detection result as an anomaly feature, and determining that an anomaly cause is a value of the anomaly feature violating the consequent feature value rule.

According to a second aspect, an embodiment of the present application provides an anomaly interpretation apparatus. The apparatus includes:

an anomaly detection result obtaining module, configured to obtain an anomaly detection result including a plurality of detection features;
a target association rule obtaining module, configured to obtain a target association rule corresponding to the anomaly detection result, where the target association rule is an association relationship among values of the detection features obtained in advance based on a detection result set, the target association rule includes an antecedent feature value rule and a consequent feature value rule, both an antecedent feature and a consequent feature are detection features included in the anomaly detection result, the antecedent feature in the anomaly detection result meets the antecedent feature value rule, and the consequent feature in the anomaly detection result does not meet the consequent feature value rule; and
an anomaly interpretation module, configured to determine the consequent feature in the anomaly detection result as an anomaly feature, and determine that an anomaly cause is a value of the anomaly feature violating the consequent feature value rule.

According to a third aspect, an embodiment of the present application provides an electronic device, including a processor, a communications interface, a memory, and a communications bus. The processor, the memory, and the communications interface communicate with each other via the communications bus. The memory is configured to store a computer program. The processor is configured to implement the method described according to the first aspect when executing the computer program stored in the memory.

According to a fourth aspect, an embodiment of the present application provides a computer storage medium, having a computer program stored therein. The computer program, when executed by a processor, implements the method described according to the first aspect.

Embodiments of the present application provide an anomaly interpretation method and apparatus, an electronic device, and a computer storage medium. In the embodiments of the present application, after an anomaly detection result is obtained, a pre-constructed target association rule that represents an association relationship among values of detection features and is violated by the anomaly detection result is also obtained. Specifically, the target association rule includes an antecedent feature value rule and a consequent feature value rule. In addition, in a case that an antecedent feature in the anomaly detection result meets the antecedent feature value rule, a consequent feature in the anomaly detection result violates (does not meet) the consequent feature value rule. Therefore, the consequent feature in the anomaly detection result may be determined as an anomaly feature. Furthermore, an anomaly cause corresponding to the anomaly detection result may be determined as a value of the anomaly feature violating the consequent feature value rule. Compared with existing anomaly interpretation methods, the anomaly interpretation solution provided in the embodiments of the present application determines, by means of a pre-established association rule, an anomaly feature while determining an anomaly cause, so that interpretation content included in anomaly interpretation is enriched, and the interpretation content is more comprehensive, thereby facilitating quick anomaly processing based on the interpretation content.

## BRIEF DESCRIPTION OF THE DRAWINGS

Some specific embodiments of embodiments of the present application will be described below in detail in an exemplary rather than restrictive manner with reference to the accompanying drawings. The same reference numerals in the accompanying drawings denote the same or similar components or parts. It should be understood by a person skilled in the art that these accompanying drawings are not necessarily drawn to scale. In the accompanying drawings:

FIG. 1 is a schematic flowchart of an anomaly interpretation method according to an embodiment of the present application.
FIG. 2 is a schematic diagram of logic for selecting a feature value threshold from candidate feature value thresholds according to an embodiment of the present application.
FIG. 3 is a schematic structural diagram of an anomaly interpretation apparatus according to an embodiment of the present application.

Reference Numerals:

101: Obtain an anomaly detection result including a plurality of detection features;
102: Obtain a target association rule corresponding to the anomaly detection result, where the target association rule includes an antecedent feature value rule and a consequent feature value rule, an antecedent feature in the anomaly detection result meets the antecedent feature value rule, and a consequent feature in the anomaly detection result does not meet the consequent feature value rule;
103: Determine the consequent feature in the anomaly detection result as an anomaly feature, and determine that an anomaly cause is a value of the anomaly feature violating the consequent feature value rule;
t1, t2, t3, t4, t5: Candidate feature value thresholds;
30: Anomaly interpretation apparatus;
301: Anomaly detection result obtaining module;
302: Target association rule obtaining module;
303: Anomaly interpretation module.

## DETAILED DESCRIPTION

To enable those skilled in the art to better understand the technical solutions in embodiments of the present application, the technical solutions in the embodiments of the present application will be described clearly and completely below with reference to the accompanying drawings in the embodiments of the present application. Obviously, the described embodiments are only some embodiments of the present application, rather than all embodiments. All other embodiments obtained by a person of ordinary skill in the art based on the embodiments of the present application shall fall within the scope of protection of the embodiments of the present application.

It should be noted that the embodiments in the present application and the features in the embodiments may be combined with each other without conflict. The terms "first" and "second" in the present application are only used for name distinction and do not represent a sequential relationship, and shall not be construed as indicating or implying relative importance or implicitly indicating the number of indicated technical features. For example, a first user, a second user, and a third user are only used to distinguish different users.

The specific implementation of the embodiments of the present application is further described below with reference to the accompanying drawings of the embodiments of the present application.

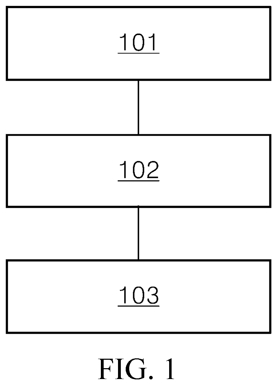

An embodiment of the present application provides an anomaly interpretation method. FIG. 1 is a schematic flowchart of an anomaly interpretation method according to an embodiment of the present application. As shown in FIG. 1, the method includes the following steps:

Step 101: Obtain an anomaly detection result including a plurality of detection features.

In this embodiment of the present application, the specific manner of obtaining the anomaly detection result is not limited. For example, the anomaly detection result may be obtained manually, or by any machine learning model for anomaly detection or anomaly identification, etc. The anomaly detection result may include a plurality of detection features. In this embodiment of the present application, neither the specific content of the detection features nor the number of detection features is limited.

To facilitate understanding of the anomaly detection result, an anomaly detection result obtained after performing anomaly detection on a water tank control system is taken as an example: It is assumed that an anomaly detection result obtained for four detection features, namely a liquid level, a pump, a valve, and a temperature is X=[11.1, on, off, 25]. The anomaly detection result X represents that a value of the liquid level is 11.1 (unit assumed: mm), the pump is in an on state, the valve is in an off state, and the temperature is 25°C.

Step 102: Obtain a target association rule corresponding to the anomaly detection result, where the target association rule includes an antecedent feature value rule and a consequent feature value rule, an antecedent feature in the anomaly detection result meets the antecedent feature value rule, and a consequent feature in the anomaly detection result does not meet the consequent feature value rule.

The target association rule is an association relationship among values of the detection features obtained in advance based on a detection result set. Both an antecedent feature and a consequent feature are detection features included in the anomaly detection result.

Specifically, the target association rule may be a value rule followed by each detection feature in a normal detection result extracted based on a detection result sample set.

The antecedent feature may be part of the plurality of detection features included in the anomaly detection result. There may be one or more antecedent features. In a special case, there may be no antecedent feature. To be specific, the antecedent feature is empty. Correspondingly, the consequent feature may be part of the plurality of detection features included in the anomaly detection result, and there may be one or more consequent features. However, the antecedent feature and the consequent feature do not include the same detection features.

The target association rule includes an antecedent feature value rule for the antecedent feature and a consequent feature value rule for the consequent feature. The antecedent feature in the anomaly detection result meets the antecedent feature value rule in the foregoing target association rule. However, the consequent feature in the anomaly detection result does not meet the consequent feature value rule in the foregoing target association rule.

For ease of understanding, the anomaly detection result X=[11.1, on, off, 25] in step 101 is still taken as an example. For X, it is assumed that the obtained target association rule is: liquid level > 10 and pump = on → valve = on. The target association rule represents that if the liquid level is greater than 10 and the pump is in an on state, the valve is required to be in an on state. The target association rule includes two antecedent features: "liquid level" and "pump", and one consequent feature: "valve". For the antecedent feature "liquid level", the antecedent feature value rule is "liquid level > 10". For the antecedent feature "pump", the antecedent feature value rule is "pump = on". For the consequent feature "valve", the consequent feature value rule is "valve = on". For the anomaly detection result X, the antecedent features "liquid level" and "pump" both meet the antecedent feature value rule in the target association rule, while the consequent feature "valve" does not meet the consequent feature value rule in the target association rule.

Optionally, in an embodiment, step 102 may include the following steps:

obtaining an association rule set pre-constructed based on a detection result sample set and including a plurality of association rules, where the detection result sample set includes a plurality of detection result samples; and
selecting a preset number of violated association rules from the association rule set as target association rules corresponding to the anomaly detection result, where the violated association rules are association rules that have been violated by the anomaly detection result.

Specifically, the detection result sample set may be a set containing a large number of detection result data samples. The set may include a relatively large number of normal detection results and a small number of anomaly detection results. Further, since key rules are value rules followed by the detection features in the normal detection results and obtained based on the detection result sample set, the set may include only the normal detection results and no anomaly detection results to improve the accuracy of the obtained association rules.

The violated association rule refers to an association rule violated by the anomaly detection result. To be specific, the value of the antecedent feature in the anomaly detection result meets the antecedent feature value rule in the violated association rule, while the value of the consequent feature in the anomaly detection result does not meet the consequent feature value rule in the violated association rule.

In the foregoing steps, when selecting a preset number of violated association rules from the association rule set, any appropriate selection principle may be adopted, which is not limited in this embodiment of the present application. However, to further ensure that the finally selected target association rule has higher accuracy, the selection may be performed in the following manner:

calculating a support and confidence of each association rule in the association rule set, where the support of an association rule represents a proportion of detection result samples meeting the association rule in the detection result sample set, and the confidence of an association rule represents a proportion of detection result samples meeting the consequent feature value rule of the association rule among detection result samples meeting the antecedent feature value rule of the association rule;
calculating a candidate score of each association rule based on the support and confidence of each association rule, where the candidate score is positively correlated with the support and/or the confidence; and
selecting a preset number of violated association rules from the association rule set in descending order of the candidate score as target association rules corresponding to the anomaly detection result.

Specifically, the detection result sample meeting the association rule refers to a detection result sample meeting both the antecedent feature value rule in the association rule and the consequent feature value rule in the association rule.

Further, a candidate score of each association rule may be calculated based on the support and confidence of each association rule through the following formula:

$$\alpha \frac{\sup(A) - \theta}{1 - \theta} + \beta \frac{\text{conf}(A) - \gamma}{1 - \gamma}$$

where A represents an association rule; sup(A) represents the support of association rule A; conf(A) represents the confidence of association rule A; $\theta$ is a preset support threshold; $\gamma$ is a preset confidence threshold; $\alpha$ is a preset support weight; and $\beta$ is a preset confidence weight.

In the foregoing target association rule selection manner, the candidate score of each association rule is calculated, and then a preset number of violated association rules are selected in descending order of the candidate score as the target association rules for final anomaly interpretation. The candidate score is positively correlated with both the support and confidence of the association rule, the support of the association rule may reflect a coverage rate of the association rule in the detection result sample set to some extent, and the confidence of the association rule may reflect the accuracy of the association rule in the detection result sample set to some extent. Therefore, by means of the foregoing target association rule selection manner, violated association rules with higher data coverage rate and higher accuracy may be selected as the target association rules for final anomaly interpretation, thereby facilitating obtaining more accurate and appropriate anomaly interpretation content.

Step 103: Determine the consequent feature in the anomaly detection result as an anomaly feature, and determine that an anomaly cause is a value of the anomaly feature violating the consequent feature value rule.

Specifically, taking the anomaly detection result X and the target association rule as an example, the consequent feature "valve" in the anomaly detection result X may be determined as an anomaly feature, and the anomaly cause is determined as the value of "valve" in X violating the consequent feature value rule "valve = on" in the target association rule.

According to the anomaly interpretation method provided in this embodiment of the present application, after an anomaly detection result is obtained, a pre-constructed target association rule that represents an association relationship among values of detection features and is violated by the anomaly detection result is also obtained. Specifically, the target association rule includes an antecedent feature value rule and a consequent feature value rule. In addition, in a case that an antecedent feature in the anomaly detection result meets the antecedent feature value rule, a consequent feature in the anomaly detection result violates (does not meet) the consequent feature value rule. Therefore, the consequent feature in the anomaly detection result may be determined as an anomaly feature. Furthermore, an anomaly cause corresponding to the anomaly detection result may be determined as a value of the anomaly feature violating the consequent feature value rule. Compared with existing anomaly interpretation methods, the anomaly interpretation solution provided in the embodiments of the present application determines, by means of a pre-established association rule, an anomaly feature while determining an anomaly cause, so that interpretation content included in anomaly interpretation is enriched, and the interpretation content is more comprehensive, thereby facilitating quick anomaly processing based on the interpretation content.

The target association rule in the foregoing embodiment is selected from an association rule set pre-constructed based on the detection result sample set and including a plurality of association rules. A construction process of each association rule in the association rule set is described below:

The association rule may include a multi-feature association rule, where the multi-feature association rule refers to an association rule in which both the antecedent feature and the consequent feature are non-empty. A construction process of the multi-feature association rule may include:

constructing a feature value rule corresponding to each detection feature, where a support of the feature value rule in the detection result sample set is greater than a preset first support threshold;

generating a corresponding candidate rule combination for each detection result sample in the detection result sample set, where the candidate rule combination is combined by feature value rules met by the detection result sample;

selecting, from candidate combination rules corresponding to the respective detection result samples, a combination rule having a support greater than a preset second support threshold; and

performing feature splitting on the selected combination rule to obtain the multi-feature association rule, where the multi-feature association rule includes the antecedent feature value rule and the consequent feature value rule obtained by splitting the combination rule.

Specifically, the support of a feature value rule in the detection result sample set refers to a proportion of detection result samples meeting the feature value rule in the detection result sample set.

The process of generating a candidate rule combination corresponding to each detection result sample is interpreted below by way of example:

It is assumed that the constructed feature value rules are: p1, p2, ..., pn. Since any detection result sample Mi in the detection result sample set only meets the two feature value rules p1 and p2, the candidate rule combination corresponding to Mi is {p1, p2}.

In this embodiment of the present application, the specific construction manner of the feature value rule corresponding to each detection feature is not limited, and may be any appropriate rule construction manner such that the support of the constructed feature value rule in the detection result sample set is greater than the preset first support threshold. The support of a feature value rule in the detection result sample set refers to a proportion of detection result samples meeting the feature value rule in the entire detection result sample set.

Further, the detection feature may generally be a discrete feature or a continuous feature. The discrete feature is a detection feature having a possible value (candidate value) as a discrete value. The continuous feature is a detection feature having a possible value (candidate value) as a continuous value range. For example, for four detection features "liquid level", "pump", "valve", and "temperature", the possible values of "pump" and "valve" are discrete values: "on" or "off". Therefore, the detection features "pump" and "valve" are discrete features. The possible values of "liquid level" and "temperature" are range intervals. Therefore, the detection features "liquid level" and "temperature" are continuous features.

Constructing, for the discrete feature, a feature value rule corresponding to each detection feature may include:

generating a corresponding candidate feature value rule based on each candidate feature value of the discrete feature; and

determining, as a feature value rule corresponding to the discrete feature, a candidate feature value rule having a support greater than a preset third support threshold.

Specifically, for example, for the discrete feature "pump", candidate feature values are "on" and "off". Therefore, a candidate feature value rule "pump = on" corresponding to "on" and a candidate feature value rule "pump = off" corresponding to "off" may be generated.

In addition, for candidate feature value rules having supports less than or equal to the preset third support threshold, such candidate feature value rules may be combined to obtain a combined candidate feature value rule. Then, the combined candidate feature value rule having a support greater than the third support threshold is determined as the feature value rule corresponding to the discrete feature. For example, it is assumed that there are candidate feature value rules P1 and P2, where both the support of P1 and the support of P2 are less than the third support threshold, while the support of a combined candidate feature value rule "P1 or P2" obtained by combining P1 and P2 is greater than the third support threshold. Then the combined candidate feature value rule "P1 or P2" may be determined as the feature value rule.

Further, constructing, for the continuous feature, a feature value rule corresponding to each detection feature may include:

obtaining a feature value threshold of the continuous feature, so as to divide a value range of the continuous feature into a plurality of value intervals based on the feature value threshold;

generating a corresponding candidate feature value rule based on each value interval of the continuous feature; and determining, as a feature value rule corresponding to the continuous feature, a candidate feature value rule having a support greater than a preset fourth support threshold.

Specifically, for example, if feature value thresholds obtained for a continuous feature Fn are T1 and T2 (T1<T2), the value range of the continuous feature may be divided into two intervals: interval 1: $(-\infty, T1]$, interval 2: $(T1, T2)$, and interval 3: $[T2, +\infty)$. The corresponding candidate feature value rule generated based on interval 1 is: $Fn \leq T1$. The corresponding candidate feature value rule generated based on interval 2 is: $T1 < Fn < T2$. The corresponding candidate feature value rule generated based on interval 3 is: $T2 \leq Fn$.

This embodiment of the present application does not limit the manner of obtaining the feature value threshold of the continuous feature. For example, the feature value threshold may be set randomly, or calculated by any preset calculation manner. In addition, in this embodiment of the present application, the number of feature value thresholds is not limited, which may be customized according to actual conditions.

Further, to finally obtain more candidate feature value rules meeting a support requirement (greater than a preset fourth support threshold), the feature value threshold of the continuous feature may be obtained in the following manner:

constructing a decision tree regression model for the continuous feature;

training the decision tree regression model based on the detection result sample set to obtain a trained regression model;

extracting node attribute information of each node in the trained regression model, where the node attribute information includes a candidate feature value threshold; and

selecting from the candidate feature value thresholds to obtain the feature value threshold.

Specifically, when training the decision tree regression model based on the detection result samples, the current continuous feature being processed may be used as a model output, and other continuous features except the current continuous feature may be used as inputs. Further, information gain and variance reduction may be used as criteria for evaluating model quality, and a stopping criterion may be adopted for model training. To be specific, a minimum number of samples required for each leaf node in the model is greater than $D \times \theta$, where D is a total number of detection result samples contained in the detection result sample set, and $\theta$ is a preset support threshold. In this way, an excessive number of feature value thresholds may be avoided.

In addition, in this embodiment of the present application, the specific selection manner of obtaining feature value thresholds from candidate feature value thresholds is not limited, which may be customized according to actual conditions. For example, random selection may be adopted, or a preset selection algorithm may be used.

Further, the node attribute information further includes: a node impurity reduction amount. Correspondingly, the process of selecting from the candidate feature value thresholds to obtain the feature value threshold may include:

generating, for each corresponding candidate feature value threshold, an alternative feature value rule corresponding to the candidate feature value threshold in descending order of the impurity reduction amount based on a value interval obtained from the candidate feature value threshold and a preceding candidate feature value threshold; and

determining the candidate feature value threshold as the feature value threshold if the support of each alternative feature value rule corresponding to the candidate feature value threshold is greater than a preset fifth support threshold.

Specifically, the node impurity reduction represents the reduction of a node impurity level. A larger node impurity reduction indicates higher predictability of the node for the continuous feature. To be specific, the uncertainty of the continuous feature is reduced. In this embodiment of the present application, a candidate feature value threshold corresponding to a larger impurity reduction is selected as a final feature value threshold as much as possible, which is more conducive to finally finding an association rule that includes the foregoing feature value threshold and has higher data coverage and higher accuracy.

When generating a corresponding candidate feature value rule for each candidate feature value threshold, the candidate feature value threshold may be determined as a current candidate feature value threshold, and the preceding candidate feature value threshold refers to another candidate feature value threshold of the current candidate feature value threshold.

Further, to reduce a data processing amount in the association rule construction process, the number of finally determined feature value thresholds may be limited. For example, the number of finally determined feature value thresholds is less than a preset number threshold.

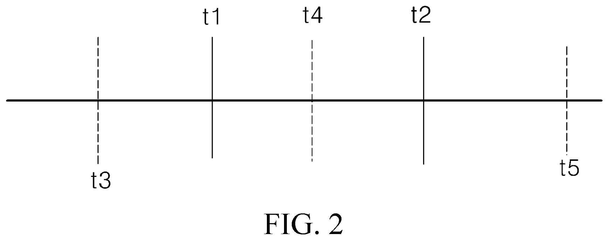

Referring to FIG. 2, FIG. 2 is a schematic diagram of logic for selecting a feature value threshold from candidate feature value thresholds according to an embodiment of the present application. The process of selecting feature value thresholds is interpreted below in conjunction with FIG. 2.

It is set that t1, t2, t3, t4, and t5 are candidate feature value thresholds for the continuous feature Fn, where the corresponding node impurity reductions of t1, t2, t3, t4, and t5 are reduced in sequence. For t1, t1 divides Fn into two value intervals: (-∞, t1] and (t1, +∞). Based on the two intervals, candidate feature value rules Fn≤t1 and t1<Fn are generated. Since the supports of both Fn≤t1 and t1<Fn are greater than a preset fifth support threshold, the candidate feature value threshold t1 is determined as a feature value threshold. For t2, t2 and t1 divide Fn into three value intervals: (-∞, t1], (t1, t2], and (t2, +∞). Based on the three intervals, candidate feature value rules Fn≤t1, t1<Fn≤t2, and t2<Fn are generated. At this moment, since the supports of Fn≤t1 and t2<Fn are both greater than the preset fifth support threshold, the candidate feature value threshold t2 may be determined as a feature value threshold only if the support of t1<Fn≤t2 is also greater than the preset fifth support threshold.

By analogy, for t3, the candidate feature value threshold t3 may be determined as a feature value threshold only if the support of t3≤Fn<t1 is also greater than the preset fifth support threshold. For t4, the candidate feature value threshold t4 may be determined as a feature value threshold only if the support of t1≤Fn<t4 is greater than the preset fifth support threshold and the support of t4≤Fn<t2 is also greater than the preset fifth support threshold. For t5, the candidate feature value threshold t5 may be determined as a feature value threshold only if the support of t2≤Fn<t5 is greater than the preset fifth support threshold.

In addition, for an anomaly detection result, the anomaly cause may alternatively be that the value of a single detection feature does not meet the feature value rule. Therefore, in this embodiment of the present application, the association rule may further a include single-feature association rule, where the single-feature association rule only includes a value rule of one detection feature. Based on the single-feature association rule, a simple anomaly that the value of a detection feature exceeds a preset value rule may be interpreted. Specifically, a construction process of the single-feature association rule includes:

constructing an empty set as an antecedent feature value rule of the single-feature association rule;

taking, for a single discrete detection feature, the single detection feature as a consequent feature, and obtaining a consequent feature value rule based on all candidate values of the single detection feature; and

taking, for a single continuous detection feature, the single detection feature as a consequent feature, and generating a consequent feature value rule according to a Pauta criterion (3σ criterion) based on an average value and a standard deviation of the single detection feature in the detection result sample set.

Specifically, assuming that candidate values for a continuous feature Fc are 1, 2, and 3, the generated consequent feature value rule is: $Fc \in \{1, 2, 3\}$, and the finally obtained single-feature association rule is: $ø \to Fc \in \{1, 2, 3\}$, where ø represents an empty set. The single-feature association rule represents that the value of Fc is required to be one of 1, 2, and 3.

Assuming that an average value of a single detection feature in the detection result sample set for a continuous feature Fn is $\mu$ and a standard deviation is $\sigma$, the generated consequent feature value rule is: $\mu-3\sigma \leq Fn \leq \mu+3\sigma$. The finally obtained single-feature association rule is: $ø \to \mu-3\sigma \leq Fn \leq \mu+3\sigma$. The single-feature association rule represents that the value of Fn is within the range $[\mu-3\sigma, \mu+3\sigma]$.

Refer to Table 1 below. Table 1 lists the corresponding interpretation contents obtained by using different anomaly interpretation modes for the four detection features of liquid level, pump, valve, and temperature in step 101, and the anomaly detection result X=[11.1, on, off, 25].

Table 1

| Name of Anomaly Interpretation Method | Interpretation Content |
|---|---|
| SiNNE | A liquid level, a pump, and a valve are anomaly features |
| COIN/AT0N | An anomaly weight value of the liquid level is 0.3; an anomaly weight value of the pump is 0.2; an anomaly weight value of the valve is 0.4; and an anomaly weight value of the temperature is 0.1 |
| SHAP | The liquid level, the pump, and the valve increase an anomaly prediction probability of a model, with increments of 0.3, 0.2, and 0.4 respectively; |
|  | the temperature reduces the anomaly prediction probability of the model, with a reduction of 0.1 |

(continued)

| Name of Anomaly Interpretation Method | Interpretation Content |
|---|---|
| LIME | When liquid level > 10, pump = on, valve = off, the anomaly prediction probability of the model is increased by 0.3, 0.2, and 0.4 respectively; when temperature < 30, the anomaly prediction probability of the model is reduced by 0.1 |
| Anchor | If liquid level > 10, pump = on, valve = off, x is classified as an anomaly |
| Present application | If liquid level > 10 and pump = on, the valve is required to be on; If liquid level > 10, pump = on, but the valve is not on, x is classified as an anomaly |

It may be clearly seen from Table 1 that the anomaly interpretation method provided in this embodiment of the present application obtains more comprehensive interpretation content (an anomaly feature is determined and an anomaly cause is also determined), so that interpretation content included in anomaly interpretation is enriched, and the interpretation content is more comprehensive, thereby facilitating quick anomaly processing based on the interpretation content.

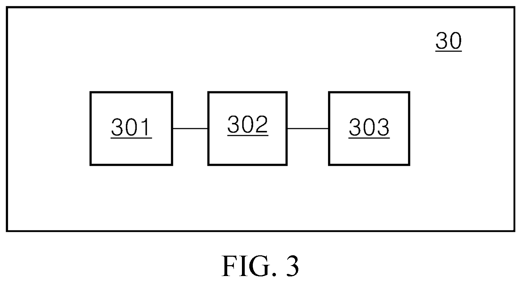

Based on an anomaly interpretation method provided in any one of the foregoing embodiments, an embodiment of the present application provides an anomaly interpretation apparatus. As shown in FIG. 3, FIG. 3 is a schematic structural diagram of an anomaly interpretation apparatus according to an embodiment of the present application. An anomaly interpretation apparatus 30 includes: an anomaly detection result obtaining module 301, a target association rule obtaining module 302, and an anomaly interpretation module 303.

The anomaly detection result obtaining module 301 is configured to obtain an anomaly detection result including a plurality of detection features.

The target association rule obtaining module 302 is configured to obtain a target association rule corresponding to the anomaly detection result. The target association rule is an association relationship among values of the detection features obtained in advance based on a detection result set. The target association rule includes an antecedent feature value rule and a consequent feature value rule. Both an antecedent feature and a consequent feature are detection features included in the anomaly detection result. The antecedent feature in the anomaly detection result meets the antecedent feature value rule. The consequent feature in the anomaly detection result does not meet the consequent feature value rule.

The anomaly interpretation module 303 is configured to determine the consequent feature in the anomaly detection result as an anomaly feature, and determine that an anomaly cause is a value of the anomaly feature violating the consequent feature value rule.

Optionally, in an embodiment of the present application, the target association rule obtaining module 302 is specifically configured to:

obtain an association rule set pre-constructed based on a detection result sample set and including a plurality of association rules, where the detection result sample set includes a plurality of detection result samples; and
select a preset number of violated association rules from the association rule set as target association rules corresponding to the anomaly detection result, where the violated association rules are association rules that have been violated by the anomaly detection result.

Optionally, in an embodiment of the present application, when selecting a preset number of violated association rules from the association rule set as target association rules corresponding to the anomaly detection result, the target association rule obtaining module 302 is specifically configured to:

calculate a support and confidence of each association rule in the association rule set, where the support of an association rule represents a proportion of detection result samples meeting the association rule in the detection result sample set, and the confidence of an association rule represents a proportion of detection result samples meeting the consequent feature value rule of the association rule among detection result samples meeting the antecedent feature value rule of the association rule;
calculate a candidate score of each association rule based on the support and confidence of each association rule, where the candidate score is positively correlated with the support and/or the confidence; and
select a preset number of violated association rules from the association rule set in descending order of the candidate score as target association rules corresponding to the anomaly detection result.

Optionally, in an embodiment of the present application, the association rule includes a multi-feature association rule. The anomaly interpretation apparatus 30 further includes:

a multi-feature association rule constructing module, configured to: construct a feature value rule corresponding to each detection feature, where a support of the feature value rule in the detection result sample set is greater than a preset first support threshold; generate a corresponding candidate rule combination for each detection result sample in the detection result sample set, where the candidate rule combination is combined by feature value rules met by the detection result sample; select, from candidate combination rules corresponding to the respective detection result samples, a combination rule having a support greater than a preset second support threshold; and perform feature splitting on the selected combination rule to obtain the multi-feature association rule, where the multi-feature association rule includes the antecedent feature value rule and the consequent feature value rule obtained by splitting the combination rule.

Optionally, in an embodiment of the present application, the detection feature includes a discrete feature. When constructing, for the discrete feature, a feature value rule corresponding to each detection feature, the multi-feature association rule constructing module is specifically configured to:

generate a corresponding candidate feature value rule based on each candidate feature value of the discrete feature; and
determine, as a feature value rule corresponding to the discrete feature, a candidate feature value rule having a support greater than a preset third support threshold.

Optionally, in an embodiment of the present application, the detection feature further includes a continuous feature. When constructing, for the continuous feature, a feature value rule corresponding to each detection feature, the multi-feature association rule constructing module is specifically configured to:

obtain a feature value threshold of the continuous feature, so as to divide a value range of the continuous feature into a plurality of value intervals based on the feature value threshold;
generate a corresponding candidate feature value rule based on each value interval of the continuous feature; and
determine, as a feature value rule corresponding to the continuous feature, a candidate feature value rule having a support greater than a preset fourth support threshold.

Optionally, in an embodiment of the present application, when obtaining a feature value threshold of the continuous feature, the multi-feature association rule constructing module is specifically configured to:

construct a decision tree regression model for the continuous feature;
train the decision tree regression model based on the detection result sample set to obtain a trained regression model;
extract node attribute information of each node in the trained regression model, where the node attribute information includes a candidate feature value threshold; and
select from the candidate feature value thresholds to obtain the feature value threshold.

Optionally, in an embodiment of the present application, the node attribute information further includes: a node impurity reduction amount. When selecting from the candidate feature value thresholds to obtain the feature value threshold, the multi-feature association rule constructing module is specifically configured to:

generate, for each corresponding candidate feature value threshold, an alternative feature value rule corresponding to the candidate feature value threshold in descending order of the impurity reduction amount based on a value interval obtained from the candidate feature value threshold and a preceding candidate feature value threshold; and
determine the candidate feature value threshold as the feature value threshold if the support of each alternative feature value rule corresponding to the candidate feature value threshold is greater than a preset fifth support threshold.

Optionally, in an embodiment of the present application, the association rule further includes a single-feature association rule. The anomaly interpretation apparatus 30 further includes:

a single-feature association rule constructing module, configured to: construct an empty set as an antecedent feature value rule of the single-feature association rule; take, for a single discrete detection feature, the single detection feature as a consequent feature, and obtain a consequent feature value rule based on all candidate values of the single detection feature; and
take, for a single continuous detection feature, the single detection feature as a consequent feature, and generate a consequent feature value rule according to a Pauta criterion based on an average value and a standard deviation of the single detection feature in the detection result sample set.

The anomaly interpretation apparatus according to this embodiment of the present application is configured to implement the corresponding anomaly interpretation method in the plurality of foregoing method embodiments, and has the beneficial effects of the corresponding method embodiments. Details are not described herein again. In addition, for the functional implementation of each module in the anomaly interpretation apparatus according to this embodiment of the present application, refer to the description of the corresponding parts in the foregoing method embodiments. Details are not described herein again.

Based on the anomaly interpretation method described in any one of the foregoing embodiments, an embodiment of the present application provides an electronic device, including: a processor, a communications interface, a memory, and a communications bus. The processor, the communications interface, and the memory communicate with each other via the communications bus. The memory is configured to store a computer program. The processor is configured to implement the method described in any one of the foregoing embodiments when executing the computer program stored in the memory.

Based on the anomaly interpretation method described in any one of the foregoing embodiments, an embodiment of the present application provides a computer storage medium having a computer program stored therein. The computer program, when executed by a processor, implements the method described in any one of the foregoing embodiments.

It should be noted that according to implementation needs, each component/step described in the embodiments of the present application may be divided into more components/steps, or two or more components/steps or some operations of the components/steps may be combined into a new component/step, so as to achieve the objectives of the embodiments of the present application.

The method according to the embodiments of the present application may be implemented in hardware and firmware, or implemented as software or computer code that may be stored in a recording medium (e.g., a CD ROM, a RAM, a floppy disk, a hard disk, or a magneto-optical disk), or implemented as computer code that is downloaded by using a network, is originally stored in a remote recording medium or a non-transitory machine-readable medium, and is to be stored in a local recording medium. Thus, the method described herein may be processed by such software stored on a recording medium using a general-purpose computer, a special-purpose processor, or programmable or special-purpose hardware (e.g., an ASIC or an FPGA). It may be understood that a computer, a processor, a microprocessor controller, or programmable hardware includes a storage component (e.g., a RAM, a ROM, or a flash memory) that may store or receive software or computer code. When the software or the computer code is accessed and executed by the computer, the processor, or the hardware, the regulator control method described herein is implemented. In addition, when a general-purpose computer accesses code for implementing the regulator control method shown herein, execution of the code converts the general-purpose computer into a dedicated computer for executing the regulator control method shown herein.

It should also be noted that the terms "include," "comprise," or any other variation thereof are intended to cover a non-exclusive inclusion, such that a process, method, article, or device that includes a list of elements includes not only those elements, but also other elements not explicitly listed, or elements inherent to such process, method, article, or device. Without more restrictions, an element defined by the statement "including a" does not exclude the presence of other identical elements in the process, method, article, or device that includes the element.

A person of ordinary skill in the art may understand that the example units and method steps described in connection with the embodiments disclosed herein can be implemented by electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but it shall not be considered that the implementation goes beyond the scope of the embodiments of the present application.

The embodiments of this specification are all described in a progressive manner. For same or similar parts in the embodiments, refer to each other. Descriptions of each embodiment focus on a difference from other embodiments. Especially, a system embodiment is basically similar to a method embodiment, and therefore is described briefly. For related parts, refer to partial descriptions in the method embodiment.

The above implementations are only used to illustrate the embodiments of the present application, rather than to limit the embodiments of the present application. A person of ordinary skill in the relevant art may make various changes and variations without departing from the spirit and scope of the embodiments of the present application. Therefore, all equivalent technical solutions also fall within the scope of the embodiments of the present application, and the patent protection scope of the embodiments of the present application shall be defined by the claims.

## Claims

1. An anomaly interpretation method, the method comprising:

obtaining an anomaly detection result comprising a plurality of detection features;

obtaining a target association rule corresponding to the anomaly detection result, wherein the target association rule is an association relationship among values of the detection features obtained in advance based on a detection result set, the target association rule comprises an antecedent feature value rule and a consequent feature value rule, both an antecedent feature and a consequent feature are detection features comprised in the anomaly detection result, the antecedent feature in the anomaly detection result meets the antecedent feature value rule, and the consequent feature in the anomaly detection result does not meet the consequent feature value rule; and

determining the consequent feature in the anomaly detection result as an anomaly feature, and determining that an anomaly cause is a value of the anomaly feature violating the consequent feature value rule.

2. The method according to claim 1, wherein the obtaining a target association rule corresponding to the anomaly detection result comprises:

obtaining an association rule set pre-constructed based on a detection result sample set and comprising a plurality of association rules, wherein the detection result sample set comprises a plurality of detection result samples; and

selecting a preset number of violated association rules from the association rule set as target association rules corresponding to the anomaly detection result, wherein the violated association rules are association rules that have been violated by the anomaly detection result.

3. The method according to claim 2, wherein the selecting a preset number of violated association rules from the association rule set as target association rules corresponding to the anomaly detection result comprises:

calculating a support and confidence of each association rule in the association rule set, wherein the support of an association rule represents a proportion of detection result samples meeting the association rule in the detection result sample set, and the confidence of an association rule represents a proportion of detection result samples meeting the consequent feature value rule of the association rule among detection result samples meeting the antecedent feature value rule of the association rule;

calculating a candidate score of each association rule based on the support and confidence of each association rule, wherein the candidate score is positively correlated with the support and/or the confidence; and

selecting a preset number of violated association rules from the association rule set in descending order of the candidate score as target association rules corresponding to the anomaly detection result.

4. The method according to claim 2 or 3, wherein the association rule comprises a multi-feature association rule, and a construction process of the multi-feature association rule comprises:

constructing a feature value rule corresponding to each detection feature, wherein a support of the feature value rule in the detection result sample set is greater than a preset first support threshold;

generating a corresponding candidate rule combination for each detection result sample in the detection result sample set, wherein the candidate rule combination is combined by feature value rules met by the detection result sample;

selecting, from candidate combination rules corresponding to the respective detection result samples, a combination rule having a support greater than a preset second support threshold; and

performing feature splitting on the selected combination rule to obtain the multi-feature association rule, wherein the multi-feature association rule comprises the antecedent feature value rule and the consequent feature value rule obtained by splitting the combination rule.

5. The method according to claim 4, wherein the detection feature comprises a discrete feature, and constructing, for the discrete feature, a feature value rule corresponding to each detection feature comprises:

generating a corresponding candidate feature value rule based on each candidate feature value of the discrete feature; and

determining, as a feature value rule corresponding to the discrete feature, a candidate feature value rule having a support greater than a preset third support threshold.

6. The method according to claim 4, wherein the detection feature further comprises a continuous feature, and constructing, for the continuous feature, a feature value rule corresponding to each detection feature comprises:

obtaining a feature value threshold of the continuous feature, so as to divide a value range of the continuous feature into a plurality of value intervals based on the feature value threshold;
generating a corresponding candidate feature value rule based on each value interval of the continuous feature; and determining, as a feature value rule corresponding to the continuous feature, a candidate feature value rule having a support greater than a preset fourth support threshold.

7. The method according to claim 6, wherein the obtaining a feature value threshold of the continuous feature comprises:

constructing a decision tree regression model for the continuous feature;
training the decision tree regression model based on the detection result sample set to obtain a trained regression model;
extracting node attribute information of each node in the trained regression model, wherein the node attribute information comprises a candidate feature value threshold; and
selecting from the candidate feature value thresholds to obtain the feature value threshold.

8. The method according to claim 7, wherein the node attribute information further comprises: a node impurity reduction amount, and the selecting from the candidate feature value thresholds to obtain the feature value threshold comprises:

generating, for each corresponding candidate feature value threshold, an alternative feature value rule corresponding to the candidate feature value threshold in descending order of the impurity reduction amount based on a value interval obtained from the candidate feature value threshold and a preceding candidate feature value threshold; and
determining the candidate feature value threshold as the feature value threshold if the support of each alternative feature value rule corresponding to the candidate feature value threshold is greater than a preset fifth support threshold.

9. The method according to claim 2 or 3, wherein the association rule further comprises a single-feature association rule, and a construction process of the single-feature association rule comprises:

constructing an empty set as an antecedent feature value rule of the single-feature association rule;
taking, for a single discrete detection feature, the single detection feature as a consequent feature, and obtaining a consequent feature value rule based on all candidate values of the single detection feature; and
taking, for a single continuous detection feature, the single detection feature as a consequent feature, and generating a consequent feature value rule according to a Pauta criterion based on an average value and a standard deviation of the single detection feature in the detection result sample set.

10. An anomaly interpretation apparatus, the apparatus comprising:

an anomaly detection result obtaining module, configured to obtain an anomaly detection result comprising a plurality of detection features;
a target association rule obtaining module, configured to obtain a target association rule corresponding to the anomaly detection result, wherein the target association rule is an association relationship among values of the detection features obtained in advance based on a detection result set, the target association rule comprises an antecedent feature value rule and a consequent feature value rule, both an antecedent feature and a consequent feature are detection features comprised in the anomaly detection result, the antecedent feature in the anomaly detection result meets the antecedent feature value rule, and the consequent feature in the anomaly detection result does not meet the consequent feature value rule; and
an anomaly interpretation module, configured to determine the consequent feature in the anomaly detection result as an anomaly feature, and determine that an anomaly cause is a value of the anomaly feature violating the consequent feature value rule.

11. An electronic device, comprising: a processor, a communications interface, a memory, and a communications bus, wherein the processor, the communications interface, and the memory communicate with each other via the communications bus;

the memory is configured to store a computer program; and
the processor is configured to implement, when executing the program stored in the memory, the steps of the method according to any one of claims 1 to 9.

12. A computer storage medium, having a computer program stored therein, wherein the computer program, when executed by a processor, implements the steps of the method according to any one of claims 1 to 9.

13. A computer program product, the computer program product being tangibly stored in a computer-readable medium and comprising computer-executable instructions, wherein the computer-executable instructions, when executed, cause at least one processor to perform the steps of the method according to any one of claims 1 to 9.

FIG. 1

FIG. 2

FIG. 3

## INTERNATIONAL SEARCH REPORT

| International application No. |
| --- |
| **PCT/CN2023/114252** |

| A. | CLASSIFICATION OF SUBJECT MATTER |
| --- | --- |

G06F 18/2433(2023.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 异常交易, 异常行为, 异常解释, 规则, 满足条件, 不满足条件, 支持度, 置信度, abnormal deal, abnormal behavior, abnormal interpretation, rules, condition satisfied, condition not satisfied, support, confidence

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112700252 A (TENCENT TECHNOLOGY (SHENZHEN) CO., LTD.) 23 April 2021 (2021-04-23) <br> description, paragraphs 0034-0082 | 1-2, 10-13 |
| A | WO 2020078059 A1 (ALIBABA GROUP HOLDING LIMITED) 23 April 2020 (2020-04-23) <br> entire document | 1-13 |
| A | WO 2021109314 A1 (WANGSU SCIENCE & TECHNOLOGY CO., LTD.) 10 June 2021 (2021-06-10) <br> entire document | 1-13 |
| A | CN 114065194 A (INDUSTRIAL AND COMMERCIAL BANK OF CHINA CO., LTD.) 18 February 2022 (2022-02-18) <br> entire document | 1-13 |
| A | CN 114187490 A (CHINA TELECOM CORP., LTD.) 15 March 2022 (2022-03-15) <br> entire document | 1-13 |
| A | CN 114444705 A (HUAWEI TECHNOLOGIES CO., LTD.) 06 May 2022 (2022-05-06) <br> entire document | 1-13 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 April 2024** | **28 April 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/114252**

| Patent document cited in search report | | | Publication date (day/month/year) | Patent family member(s) | | | Publication date (day/month/year) |
|---|---|---|---|---|---|---|---|
| CN | 112700252 | A | 23 April 2021 | None | | | |
| WO | 2020078059 | A1 | 23 April 2020 | TW | 202044111 | A | 01 December 2020 |
| | | | | TWI | 723476 | B | 01 April 2021 |
| | | | | CN | 109583470 | A | 05 April 2019 |
| WO | 2021109314 | A1 | 10 June 2021 | CN | 111092757 | A | 01 May 2020 |
| CN | 114065194 | A | 18 February 2022 | None | | | |
| CN | 114187490 | A | 15 March 2022 | None | | | |
| CN | 114444705 | A | 06 May 2022 | None | | | |